# EUROPÄISCHE PATENTANMELDUNG

(11) **EP 0 666 411 A1**
(43) Veröffentlichungstag der Anmeldung: **09.08.1995**
(21) Anmeldenummer: 94119726.1
(22) Anmeldetag: 14.12.1994
(51) Int. Cl.: F02B 37/02

(54) **Abgasleitungssystem**

(30) Priorität: 05.02.1994 DE 4403583
(71) Anmelder: Krupp MaK Maschinenbau GmbH, D-24159 Kiel (DE)
(72) Erfinder: Schacht, Hans-Jürgen, D-24214 Gettorf (DE); Zigan, Detlef, Dr.-Ing., D-24111 Kiel (DE)
(74) Vertreter: Hansmann, Dierk, Dipl.-Ing.

(57) **Zusammenfassung**

Bei einem Abgasleitungssystem für eine nach dem Stauprinzip aufgeladene mehrzylindrische Brennkraftmaschine sind die zylinderkopfseitigen Abgasauslässe über Verbindungskanäle (2) mit einer an die Turbine des Turboladers angeschlossenen Abgassammelleitung (A) verbunden. Jeder Verbindungskanal (2) ist als Diffusor (D) ausgebildet und wirkt mit einer in der Abgassammelleitung (A) angeordneten Beschleunigerdüse (10) zusammen. Die Austrittsöffnung (14) dieser Düse (10) ist im Bereich der Mündungsöffnung (4) des Verbindungskanals (2) in die Abgassammelleitung (A) vorgesehen.

## Beschreibung

Die Erfindung bezieht sich auf ein Abgasleitungssystem zwischen einer nach dem Stauprinzip aufgeladenen mehrzylindrigen Brennkraftmaschine und einem Abgasturbolader, bei dem die zylinderkopfseitigen Abgasauslässe der Brennkraftmaschine über Verbindungskanäle mit einer an die Turbine des Turboladers angeschlossenen Abgassammelleitung verbunden ist.

Aus der DE 32 16 433 C2 ist ein Abgasleitungssystem an einer nach dem Stauprinzip aufgeladenen mehrzylindrigen Brennkraftmaschine bekannt, bei der an dem Einlaß einer Turbine eines Abgasturbolader eine Abgassammelleitung angeschlossen ist, in die von den zylinderkopfseitigen Abgasauslässen der Maschine wegführende Anschlußrohre einmünden. Desweiteren ist aus der DE 31 21 341 C2 ein Abgasleitungssystem für eine nach dem Stauprinzip aufgeladene Brennkraftmaschine bekannt bei der der Verbindungskanal vom Zylinderkopf zur Abgassammelleitung als Diffusor ausgebildet ist.

Aufgabe der Erfindung ist es, ein Abgasleitungssystem dahingehend auszubilden, daß eine möglichst effektive Abführung der Abgase und Überführung in die Abgassammelleitung erzielbar ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch den als Diffusor ausgebildeten gekrümmten Verbindungskanal das in die Abgassammelleitung einströmende Abgas druckerhöht und geschwindigkeitsvermindert wird. Im Zusammenwirken mit einer in der Leitung vorgesehenen und im Bereich der Abgas-Mündungsöffnung des Diffusors angeordneten Beschleunigungsdüse wird eine Absaugwirkung der Abgase aus dem Verbindungskanal bewirkt und eine relativ hohe Strömungsgeschwindigkeit der Abgase zur Turbine des Abgasturboladers hin erzielt.

Durch die erfindungsgemäße Abgasführung ist somit eine optimale Arbeitsfähigkeit der aus den Zylindern des Motors austretenden Abgase gewährleistet. Hierzu trägt wesentlich die Ausbildung des Verbindungskanals mit einer kontinuierlichen Öffnung von einem kreisförmigen zu einem ovalförmigen Querschnitt bei, der in die Abgassammelleitung einmündet, wobei die Mündungsöffnung unmittelbar der turbinenseitigen Austrittsöffnung zugerichtet ist.

Der Verbindungskanal ist in der Weise gekrümmt ausgebildet, daß die Mündungsöffnung schräg auf die Turbine zu unter einem spitzen Winkel zu einer Längsachse des von den Leitungsteilen gebildeten Sammelrohres angeordnet ist.

Die Abgassammelleitung besteht aus zusammengesetzten einzelnen Leitungsteilen, die den Verbindungskanal und die Beschleunigungsdüse beinhalten. Diese Teile sind einfache auswechselbar und mittels Kompensatoren miteinander verbunden.

In der Zeichnung ist ein Ausführungsbeispiel der Erfindung schematisch dargestellt. Es zeigen:
- Fig. 1: eine Draufsicht eines Teilstücks einer Abgassammelleitung teilweise im Schnitt,
- Fig. 2: eine Ansicht auf die Abgassammelleitung in Pfeilrichtung Z gesehen **und**
- Fig. 3: eine schaubildliche Darstellung des Verbindungskanals mit seiner kreisförmigen und ovalförmigen Öffnung.

Ein Abgasleitungssystem A umfaßt mehrere miteinander verbundene Leitungsteile 1. Diese sind mit einem Verbindungskanal 2 versehen, der eine mit einem Zylinder einer Brennkraftmaschine verbundene Abgas-Eintrittsöffnung 3 und eine ins Leitungsteil 1 eintretende Abgas-Mündungsöffnung 4 aufweist.

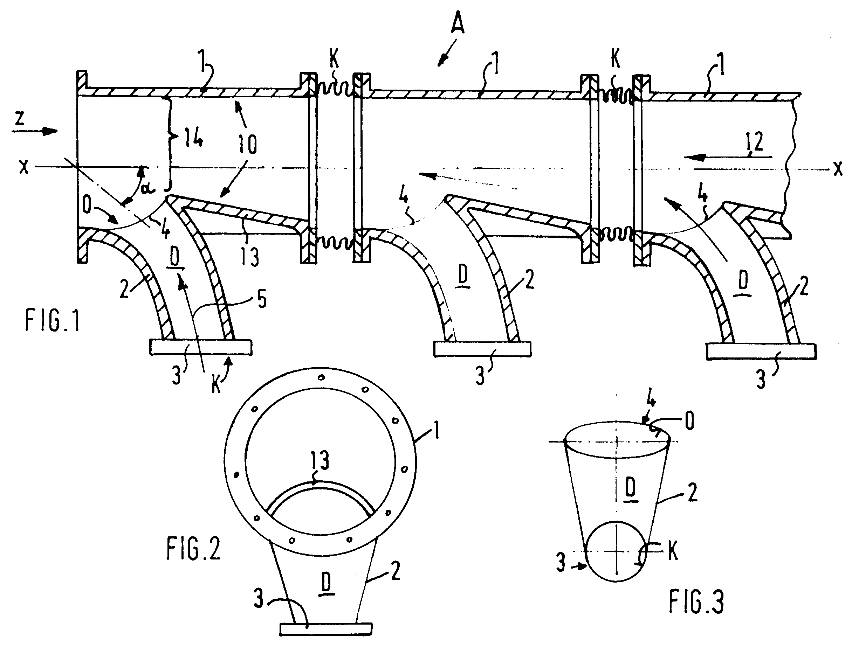

Der Verbindungskanal 2 ist als Diffusor D ausgebildet und weist zwischen der Eintrittsöffnung 3 und der Mündungsöffnung 4 eine Querschnittsöffnung in der Weise auf, daß sich der eingangsseitige, kreisförmige Querschnitt K in einen ausgangsseitigen, ovalförmigen Querschnitt O verändert, wie Fig. 3 näher zeigt.

Der Kanal 2 ist gekrümmt ausgeführt und führt die Abgase 5 unter einem Winkel Alpha zur vertikalen Längsmittenebene x-x des Leitungsteils 1 in diese ein, so daß auch die ovalförmige Abgas-Mündungsöffnung 4 unter einem Winkel steht.

In jedem Leitungsteil 1 der Abgassammelleitung A ist eine Beschleunigerdüse 10 vorgesehen. Diese erstreckt sich beispielsweise vom Verbindungsflansch des Leitungsteiles 1 bis zur Mündungsöffnung 4 des Kanals 1.

Die Beschleunigungsdüse 10 entsteht durch einen Einzug 13 eines Rohrwandbereiches bis zur Öffnung 4 hin, wodurch sich eine kontinuierliche in Strömungsrichtung verlaufende Verengung des Leitungsteiles 1 mit einer Ausgangsöffnung 14 ergibt. Diese Ausgangsöffnung 14 ist im unmittelbaren Ausströmbereich der Abgase aus der Mündungsöffnung 4 des Verbindungskanals 2 gelegen, so daß die Abgase in Pfeilrichtung 12 von den anderen Zylindern sich ejektorartig aussaugen.

Eine Verbindung der Leitungsteile 1 untereinander erfolgt unter Zwischenschaltung von Kompensatoren K.

## Patentansprüche

1. Abgasleitungssystem zwischen einer nach dem Stauprinzip aufgeladenen mehrzylindrigen Brennkraftmaschine und einem Abgasturbolader, bei dem die zylinderkopfseitigen Abgasauslässe der Brennkraftmaschine über Verbindungskanäle mit einer an die Turbine des Turboladers angeschlossenen Abgassammelleitung verbunden sind, dadurch gekennzeichnet, daß jeder Verbindungskanala (2) als Diffusor (D) ausgebildet ist, der jeweils mit einer in der Abgassammelleitung (A) angeordneten Beschleunigerdüse (10) zusammenwirkt, deren Austrittsöffnung (14) im Bereich der Mündungsöffnung (4) des Verbindungskanals (2) in der Abassammelleitung (A) liegt.

2. Abgasleitungssystem nach Anspruch 1, dadurch gekennzeichnet, daß die Abgassammelleitung (A) aus einzelnen zusammengesetzten Leitungsteilen (1) mit Beschleunigerdüsen (10) und Verbindungskanälen (2) besteht.

3. Abgasleitungssystem nach Anspruch 1 oder 2, dadurch gekennzeichnet, daß die Leitungsteile (1) der Abgassammelleitung (A) unter Zwischenschaltung von Kompensatoren (K) miteinander verbunden sind.

4. Abgasleitungssystem nach einem der Ansprüche 1 bis 3, dadurch gekennzeichnet, daß die Beschleunigerdüse (10) ausgangsseitig jeweils eine Verengung der Austrittsöffnung (14) aufweist, die von einem Einzug (13) eines zylindrischen Wandungsbereiches des Leitungsteiles (1) gebildet wird.

5. Abgasleitungssystem nach einem der Ansprüche 1 bis 4, dadurch gekennzeichnet, daß die von der Verengung gebildete Austrittsöffnung (14) unmittelbar benachbart der Abgas-Mündungsöffnung (4) angeordnet ist.
